# EUROPEAN PATENT SPECIFICATION

(11) **EP 0 908 472 B1**
(45) Date of publication and mention of the grant of the patent: **17.07.2002**
(21) Application number: 98124309.0
(22) Date of filing: 16.10.1991
(51) Int. Cl.: C08F 4/658, C08F 10/00

(54) **Olefin polymerization catalyst precursor**
Olefinpolymerisationskatalysatorvorläufer
Précurseur de catalyseur de polymérisation d'oléfines

(30) Priority: 18.10.1990 US 599550; 18.10.1990 US 599538; 18.10.1990 US 599610; 22.10.1990 US 600781; 22.10.1990 US 600898
(43) Date of publication of application: 14.04.1999
(62) Divisional of application: 91309518.8
(73) Proprietor: UNION CARBIDE CHEMICALS & PLASTICS TECHNOLOGY CORPORATION, Danbury, Connecticut 06817-0001 (US)
(72) Inventor: Job, Robert Charles, Houston, Texas 77077 (US)
(74) Representative: Allard, Susan Joyce

(56) References cited:
- EP-A- 0 376 188

## Description

This invention relates to a magnesium-containing, titanium-containing precursor of a catalyst component which can be used to produce a high activity olefin polymerization catalyst.

The production of polymers of α-olefins, particularly ethylene and propylene, has gained commercial acceptance. The products are inexpensive and exhibit a number of commercially useful properties. In the case of the polymerization of ethylene the process is uncomplicated in that the product type is not influenced by the manner in which the ethylene molecules add to the growing polymer chain and the polymeric product does not exist in stereoisomeric forms.

In the case of polymerization of propylene the presence of methyl groups provides the several types of product depending on the steric regularity with which units add to the growing polymeric chain. Most commercial polypropylene is crystalline and results from stereoregular addition of propylene units in a regular head-to-tail manner. Polypropylene in which the units add randomly is termed atactic. This amorphous form is less desirable and often must be removed as by extraction.

Also significant is the activity of the polymerization catalyst. The early trivalent titanium, chromium or vanadium catalysts were of low activity and the product contained a significant proportion of catalyst residues. Removal of such residues was required to obtain commercially satisfactory properties.

The more recent titanium-based polymerization catalysts are stereoregulating and have sufficient activity to avoid extraction and deashing steps. In terms employed conventionally, the high activity catalysts are formed from a solid procatalyst which typically contains magnesium, titanium and halide moieties, a cocatalyst which is usually an organoaluminum compound and a selectivity control agent (SCA). Each of these components influences the catalyst and polymer produced therefrom but the procatalyst seems to have the greatest influence.

US-A-4,330,649 describes a procatalyst obtained by heating a magnesium compound with a higher alcohol and an ester to produce a solution. This solution is added to TiCl₄ and an electron donor (ED) to form the procatalyst. US-A-4,472,521 describes reacting a magnesium alkoxide with a titanium alkoxide in an aromatic hydrocarbon. TiCl₄ and an ED are added to form a solid which is post-treated with transition metal halide. US-A-4,540,679 describes the production of a catalyst component by contacting a suspension of Mg(OC₂H₅)₂ in ethanol with CO₂. The addition of organoaluminum in hydrocarbon produces granular particles employed as support for titanium compound upon contact with TiCl₄. US-A-4728705 describes solubilizing Mg(OC₂H₅)₂ in ethanol with CO₂ and spray drying the resulting solution or using the solution to impregnate carrier particles. Either type of particle is useful in the production of procatalyst of desirable morphology.

A different catalyst is described in US-A-4,710,428, wherein a magnesium compound of the general formula

Mg₄(OR)₆(ROH)₁₀A (I)

is formed wherein R is lower alkyl and A is at least one anion having a total oxidation state of -2. This complex is reacted with tetravalent titanium halide, a halohydrocarbon and an ED to form a procatalyst. The use of the above complexes has advantages in that the complexes are crystals of desirable morphology in contrast to Mg(OC₂H₅)₂ which is not. The crystals can be converted to olefin polymerization catalyst precursors and to catalysts by largely conventional technology. The catalysts are active and produce polymer products of good properties. It would be of advantage to produce improved catalyst precursors and olefin polymerization catalysts whose use results in improved polymer product.

The invention provides complex magnesium-containing, titanium-containing compounds useful as precursors of high activity olefin polymerization catalysts and a process of polymerizing lower α-olefins employing such catalysts. The polyolefins obtained by use of the catalysts have good properties and are obtained in good yield.

Accordingly the invention provides an olefin polymerization procatalyst precursor which contains moieties of magnesium and titanium and which is obtainable by contacting magnesium, a titanium alkoxide, a trialkylborate and an alkanol in an inert reaction diluent at an elevated temperature.

The procatalyst precursor can then be contacted with a halide of tetravalent titanium halide, an optional halohydrocarbon and an ED to form a solid procatalyst. The procatalyst in turn can then be contacted with an organoaluminum cocatalyst and an SCA to form a high activity olefin polymerization catalyst. The conversion of procatalyst precursor to procatalyst and of procatalyst to catalyst is largely conventional, but the procatalyst precursor can suitably be formed by a number of procedures and takes various forms and compositions depending upon the method of its preparation.

In accordance with the invention a complex alkoxide procatalyst precursor is produced by reaction of elemental magnesium with a titanium alkoxide, wherein each alkoxide has up to 4 carbon atoms, a trialkylborate, wherein each alkyl suitably has up to 4 carbon atoms, and an alkanol, suitably of up to 4 carbon atoms, in the presence of an inert diluent. In this embodiment also, the alkoxide moieties of any reactant or of the different reactants are the same or are dissimilar. It is generally preferred that all alkoxide moieties be the same and be ethoxide. The complex alkoxide of this embodiment is produced by contacting the reactants in an inert reaction diluent which suitably is a hydrocarbon diluent such as isopentane, isooctane, cyclohexane, toluene or even a kerosene fraction, or a halohydrocarbon such as methylene chloride or chlorobenzene. Isooctane is a preferred hydrocarbon diluent and chlorobenzene is a preferred halohydrocarbon diluent.

The structure of the complex alkoxide compound of this embodiment is somewhat variable and will in part by determined by the ratio of reactants employed. The structure can be illustrated by the formula

Mg₃Ti(OR)ₛ[B(OR)₄]ₜ (III)

wherein 0< t ≤ 2, s is (10-t) and each R independently is alkyl of up to 4 carbon atoms. A preferred complex alkoxide is of the above formula III wherein t is 2 and R is ethyl. The complex alkoxide is produced by contacting the reactants at an elevated temperature and suitably at a pressure sufficient to maintain the reaction mixture in a non-gaseous state. Suitable temperatures are from 40°C to 100°C, preferably from 50°C to 80°C. The contacting is conducted in a suitable reactor and can be conventionally facilitated as by shaking, stirring or refluxing. The stoichiometry of the reaction is not simple but sufficient magnesium is usually employed to provide from 1% to 6% by weight of magnesium based on total solution weight. Best results are obtained if a small amount of metal surface activator such as ferric chloride is provided to initiate reaction. The complex alkoxide product mixture is a solution of variable viscosity depending in part on the diluent and the ratio of starting materials. The complex alkoxide is an olefin polymerization procatalyst precursor and can be converted to a procatalyst by methods described below.

The olefin polymerization procatalyst precursor can be converted to a procatalyst by contact with a halide of tetravalent titanium, optionally with halohydrocarbon, and an ED. The halide of tetravalent titanium can be an aryloxy- or an alkoxy- di- or trihalide such as diethoxytitanium dichloride, dihexyloxytitanium dibromide, isopropyloxytitanium trichloride, or phenoxytitanium tribromide, or can be a titanium tetrahalide such as TiCl₄ or TiBr₄. A titanium tetrahalide is preferred, particularly TiCl₄.

The halohydrocarbon optionally employed in the production of procatalyst suitably has up to 12 carbon atoms, preferably up to 9 carbon atoms, and contains at least one halogen atom or in the case of aliphatic halohydrocarbons contains at least two halogens. Exemplary aliphatic halohydrocarbons include CH₂Cl₂, CH₂Br₂, CHCl₃, CCl₄, 1,2-dibromoethane, 1,1,3-trichloropropane, 1,1,2-trichloroethane, trichlorocyclohexane, dichlorofluoromethane and trichloroisooctane. Aromatic halohydrocarbons suitably employed include chlorobenzene, bromobenzene, dichlorobenzene and chlorotoluene. Of the aliphatic halohydrocarbons CCl₄ and 1,1,2-trichloroethane are preferred, but particularly preferred is chlorobenzene.

The electron donor employed in the procatalyst is an ED conventionally used in titanium-based olefin polymerization procatalyst. The ED can be free from active hydrogens. Examples of suitable electron donors include ethers, esters, ketones, amines, imines, amides, nitriles, phosphines, stibines, arsines and alcoholates A preferred ED is an ester, particularly an alkyl ester of an aromatic monocarboxylic or dicarboxylic acid. Preferred ED's are ethyl benzoate, ethyl p-ethylbenzoate and diisobutyl phthalate. The ED can be a mixture of compounds but preferably is a single compound. Ethyl benzoate and diisobutyl phthalate are preferred.

The manner in which the procatalyst precursor, halide of tetravalent titanium, the halohydrocarbon when employed and the ED are contacted is material but not critical. Best results are obtained when the ED is added to the procatalyst precursor and the resulting mixture is added to at least a portion of the halide of tetravalent titanium. Alternatively, the halide of tetravalent titanium is added to a mixture of the procatalyst precursor and the ED. Other modifications are suitable but less preferred. The resulting solid is typically washed with a 50/50 mixture by volume of additional halide of tetravalent titanium and halohydrocarbon at least once and often twice or more times. This washing process, often termed a halogenation, is frequently aided by the additional presence of an acid halide, particularly an aromatic acid halide such as benzoyl chloride or phthaloyl chloride. Subsequent to contacting with a halide of tetravalent titanium and halohydrocarbon, the resulting solid procatalyst can be washed with a light hydrocarbon to remove unreacted titanium compounds.

In the preferred modification, the initial contacting of ED and procatalyst precursor is conducted at a temperature from ambient temperature to 150°C. Preferably, the materials are mixed at ambient temperature. Sufficient halide of tetravalent titanium and any acid halide are used to convert a substantial portion of the anion moieties of the procatalyst precursor to halide moieties. Sufficient ED is used so that the molar ratio of ED to Mg present in the procatalyst precursor is from 0.01:1 to 10:1, preferably from 0.06:1 to 0.4:1. The final washing produces procatalyst which is stable upon drying in the absence of O₂ and active hydrogen compounds or useful without drying in the formation of an olefin polymerization catalyst by reaction with a cocatalyst and SCA.

The cocatalyst is an organoaluminum compound of the type normally employed with titanium-based procatalysts in the production of high-activity olefin polymerization catalysts. Suitable organoaluminum compounds are alkylaluminum compounds such as trialkylaluminum compounds, alkylaluminum halide compounds and alkylaluminum alkoxide compounds wherein each alkyl independently has 2 to 6 carbon atoms. The preferred alkylaluminum compounds are free of halide moieties and particularly preferred are trialkylaluminum compounds such as triethylaluminum, triisobutylaluminum and diethylhexylaluminum. Triethylaluminum is especially preferred. The organoaluminum compound is suitably employed in sufficient quantity to provide from 1 mole to 150 moles of aluminum per mole of titanium in the procatalyst, preferably from 10 moles to 100 moles of aluminum per mole of titanium.

The SCA employed in catalyst production can be any conventionally utilized in olefin polymerization catalysts based on titanium. A suitable SCA is an ED such as those above for use in procatalyst production but may also be an organosilane of the formula R'_{q}Si(OR)_{4-q} wherein R' is alkyl or aryl of up to 10 carbon atoms, R has the previously stated meaning and q is 1 or 2. A preferred SCA is an ester of an aromatic acid, e.g. ethyl p-ethylbenzoate, diisobutyl phthalate, or ethyl p-methylbenzoate, or an alkylalkoxysilane such as diisobutyldimethoxysilane, isopropyltrimethoxysilane or cyclohexylmethyldimethoxysilane. The SCA is suitably provided to give from 0.01 mole to 100 moles of SCA per mole of titanium in the procatalyst, preferably from 0.5 mole to 20 moles per mole of titanium.

The components of the olefin polymerization catalyst are contacted by largely conventional methods. In one modification, the components are contacted outside the polymerization zone as by mixing the components and introducing the preformed catalyst into the polymerization reactor. In an alternative modification, the catalyst components are introduced separately into the polymerization reactor and the catalyst is formed in situ. The olefin polymerization catalyst is useful in the polymerization of lower α-olefins under polymerization conditions and particularly in the polymerization of straight-chain α-olefins of up to 4 carbon atoms, i.e ethylene, propylene and 1-butene. The procedure of the polymerization process of the invention, by virtue of its use of a catalyst produced from the complex procatalyst precursors of the invention, provides polyolefin product having good properties in quantities which reflect the high activity of the catalyst. The polymerization product can be a homopolymer, e.g. polyethylene or polypropylene, when a single α-olefin monomer is supplied to the reactor. Alternatively, the product can be a copolymer (or terpolymer) such as EPR or polypropylene impact copolymer when two or more monomers are provided to the polymerization reactor.

The polymerization can be conducted as a gas-phase process employing one or more fluidized catalyst beds or can be conducted as a slurry-phase process employing as a diluent an inert material such as propane or a liquified monomer of the polymerization such as propylene. The molecular weight of the polymer product and thus to some extent the properties of the product are influenced by the provisions to the polymerization system of molecular hydrogen as is known in the art. The process can be conducted batch-wise or in a continuous or semi-continuous manner.

The catalyst productivity is often inversely related to selectivity so that highly active catalysts often afford polymer product of low stereoregularity. The catalysts of the invention exhibit good productivity while retaining a desirably high stereospecificity so that polymer is obtained in good quantities with sufficiently good properties that extraction and deashing steps are not required.

The invention will be further illustrated by reference to the following Example. In the Example the productivity of the catalyst (also termed "yield") is determined in kg of polymer product per gram of catalyst in a standard batch process of 1 hour. The stereospecificity of the catalyst and specifically the selectivity to isotactic product is determined by measuring the xylene solubles (XS) in accordance with the regulations of the U.S. Food and Drug Administration. The test for XS comprises dissolving a polymer sample in xylene under reflux in a flask. The flask is then placed in a water bath at 25°C for 1 hour without stirring. The precipitate formed is then removed by filtration and the solubles content is determined by evaporating an aliquot of the filtrate followed by drying and weighing the residue. The xylene solubles consist primarily of amorphous (atactic) polymer and a small amount of low molecular weight polymer. The bulk density of polymer product (B.D.) is determined in gm/cm³.

### Example I

A. Magnesium turnings (2.44g, 100 mmol), Ti(OC₂H₅)₄ (8.8g of 95%, 33 mmol) and B(OC₂H₅)₃ (4.86g, 33 mmol) were slurried in 71.3g of chlorobenzene in a 0.23 litre (8 oz) bottle and 3.5g of 3.5% FeCl₃ in ethanol were added. A balloon was attached to the bottle and the mixture was stirred while heated in a 65°C oil bath. After 40 minutes, the volume of the balloon was about 200 ml. Additional ethanol, 3.7 g, was added and the evolution of H₂ became more vigorous, providing 200 ml of gas in about 4 minutes. After 30 more minutes the evolution of gas had ceased and another 2.5g of ethanol was added. After a total of 4 hours, nearly all the Mg had reacted to give a solution. An additional 0.5g of FeCl₃ solution was added and the mixture was stirred overnight when all the Mg had reacted. The solution had a magnesium content of 2.2% and a molar B/Mg/Ti ratio of 1/3/1.
B. To 49g of a solution produced according to Example I.A, 1.32g (54 mmol) of Mg turnings, 4g of 95% TiCl₄ (17 mmol) and 5g of the 3% FeCl₃ in ethanol were added. After stirring overnight while placed in a 65°C oil bath, a slightly cloudy solution resulted. About 0.1g of Mg had not reacted. The solution had a molar B/Mg/Ti ratio of 0.5/3/1.
C. Magnesium turnings (62.9g, 2.59 moles), Ti(OC₂H₅)₄, 200g of 95%, 0.83 mmol, B(OC₂H₅)₃, 60.7g, 0.42 mole and 96g of 2% FeCl₃ in ethanol were mixed in 750g of isooctane in a 2-litre, 3-neck flask equipped with a reflux condenser. The flask and contents were heated to about 65°C and hydrogen evolved. After about 2 hours, 95g of ethanol was added and after 2 more hours 49g of ethanol was added. After stirring for a total of 36 hours at 60°C the solution which resulted was filtered while warm to recover 2.73g of magnesium. The filtrate was 1297g of a clear, olive drab solution having a magnesium content of 4.6% and a molar B/Mg/Ti ratio of 0.5/3/1.
D. Using the solutions of Examples I.A-C, olefin polymerization procatalysts were produced by employing a digest at 110°C for 60 minutes in 150 ml of TiCl₄, utilizing sufficient solution to provide 30-50 mmol magnesium. Sufficient diisobutyl phthalate was also present to provide a concentration of about 40 mmol/litre. The resulting solid product was washed at 110°C with 150 ml of a 50/50 by volume mixture of chlorobenzene and TiCl₄ containing 6 mmol/litre of phthaloyl chloride. This was followed by a 30 minute wash at 110°C with the 50/50 mixture. The resulting solid procatalyst was washed twice with isooctane at room temperature and dried under N₂ at 50°C.
   The contacting of the precursor solutions and the first wash solution was accomplished by two methods. In method 1, the diisobutyl phthalate was added to the precursor solution and the mixture was added dropwise to 150 ml of stirred TiCl₄ mixture at room temperature. After 20 minutes, the mixture was heated to 110°C for the remainder of the digest period. Method 2 is similar, except the precursor solution and ED were held overnight at room temperature before being added to the TiCl₄ mixture.
   A third method of mixing the precursor solution was also employed. In method 3, the solution of procatalyst precursor was added to the TiCl₄ digestion solution at 110°C and diisobutyl phthalate was added to the resulting mixture.
E. Polymerization catalysts were produced from the procatalysts of Example I.D.

Triethylaluminum was used as cocatalyst and diisobutyl phthalate as SCA. Using these catalysts, propylene was polymerized in a slurry-phase process in liquid propylene.

The results are shown in Table II where "Ratio" indicates the molar B/Mg/Ti ratio and "Procedure" indicates the method used to produce the procatalysts as well as the solvent employed.

**TABLE II**

| Run | Ratio | Procedure | Ti, % | Yield | XS | B.D. |
|---|---|---|---|---|---|---|
| 1 | Mg(OC₂H₅)₂ | -- | 2.28 | 26.6 | 2.7 | 0.33 |
| 2 | 0.5/3/1 | A, chlorobenzene | 3.17 | 36.7 | 3.6 | 0.37 |
| 3 | 0.5/3/1 | B, chlorobenzene | 2.55 | 23.5 | 3.4 | 0.373 |
| 4 | 1/3/1 | A, chlorobenzene | 3.04 | 25.8 | 4.3 | -- |
| 5 | 0.5/3/1 | A, chlorobenzene | 2.77 | 27.1 | 3.8 | 0.349 |
| 6 | 0.5/3/1 | C, chlorobenzene | 2.74 | 25.5 | 3.6 | 0.393 |
| 7 | 0.5/3/1 | A, isooctane | 3.11 | 32.6 | 3.3 | 0.368 |

Run 5 was repeated except that the SCA was tetramethylpiperidine. The yield was 38.6 kg polymer/g cat and the XS was 7.3%.

## Claims

1. An olefin polymerization procatalyst precursor which contains moieties of magnesium and titanium and which is obtainable by contacting magnesium, a titanium alkoxide, each alkoxide having up to 4 carbon atoms, a trialkylborate and an alkanol in an inert reaction diluent at an elevated temperature.

2. A precursor according to claim 1 wherein each alkyl group of the trialkylborate has up to 4 carbon atoms.

3. A precursor according to claim 1 or claim 2 wherein the alkanol has up to 4 carbon atoms.

4. A precursor according to any one of the preceding claims which is of the formula
Mg₃Ti(OR)ₛ[B(OR)₄]ₜ
wherein 0<t≤ 2 and s equals 10-t, and each R independently is alkyl of up to 4 carbon atoms.

5. A precursor according to claim 4 wherein t is 2 and R is ethyl.

6. A precursor according to any one of the preceding claims wherein the contacting of magnesium, a titanium alkoxide having up to 4 carbon atoms and an alkanol in an inert reaction diluent at an elevated temperature takes place at a pressure sufficient to maintain the reaction mixture in a non-gaseous state.

7. A precursor according to any one of the preceding claims wherein the elevated temperature is in the range of from 40 to 100°C.

8. A precursor according to any one of the preceding claims wherein the magnesium is provided in an amount of from 1 to 6% by weight based on the total solution weight.

9. A solid olefin polymerization procatalyst obtainable by contacting a procatalyst precursor as claimed in any one of claims 1 to 8 with a halide of tetravalent titanium, an optional halohydrocarbon and an electron donor.

10. A procatalyst according to claim 9 wherein the halide of tetravalent titanium is titanium tetrachloride and the electron donor is an alkyl ester of an aromatic monocarboxylic or dicarboxylic acid.

11. A high activity olefin polymerization catalyst obtainable by contacting a procatalyst as claimed in claim 9 or claim 10 with an organoaluminum compound cocatalyst and a selectivity control agent.

12. A catalyst according to claim 11 wherein the cocatalyst is trialkylaluminum and the selectivity control agent is an alkyl ester of an aromatic monocarboxylic or dicarboxylic acid or an organosilane of the formula
R'_{q}Si(OR)_{4-q}
wherein R' is alkyl or aryl of up to 10 carbon atoms, R is alkyl of up to 4 carbon atoms and q is 1 or 2.

13. A process for polymerizing a lower α-olefin having up to 4 carbon atoms which comprises contacting at least one lower α-olefin having up to 4 carbon atoms under polymerization conditions with a catalyst as claimed in claim 11 or 12.

14. A process according to claim 13 wherein the lower α-olefin is propylene.

## Patentansprüche

1. Olefinpolymerisationsprokatalysator-Vorläufer, der Anteile von Magnesium und Titan enthält und der durch Inberührungbringen von Magnesium, einem Titanalkoxid, wobei jedes Alkoxid bis zu 4 Kohlenstoffatome aufweist, einem Trialkylborat und einem Alkanol in einem inerten Reaktionsverdünnungsmittel bei einer erhöhten Temperatur erhältlich ist.

2. Vorläufer nach Anspruch 1, wobei jede Alkylgruppe des Trialkylborats bis zu 4 Kohlenstoffatome aufweist.

3. Vorläufer nach Anspruch 1 oder 2, wobei das Alkanol bis zu 4 Kohlenstoffatome aufweist.

4. Vorläufer nach einem der vorstehenden Ansprüche, der die Formel
Mg₃Ti(OR)ₛ[B(OR)₄]ₜ
aufweist, worin 0<t≤2 und s gleich 10-t und jedes R unabhängig voneinander Alkyl mit bis zu 4 Kohlenstoffatomen ist.

5. Vorläufer nach Anspruch 4, wobei t gleich 2 und R gleich Ethyl ist.

6. Vorläufer nach einem der vorstehenden Ansprüche, wobei das Inberührungbringen von Magnesium, einem Titanalkoxid mit bis zu 4 Kohlenstoffatomen und einem Alkanol in einem inerten Reaktionsverdünnungsmittel bei einer erhöhten Temperatur bei einem Druck stattfindet, der ausreicht, um die Reaktionsmischung in einem nichtgasförmigen Zustand zu halten.

7. Vorläufer nach einem der vorstehenden Ansprüche, wobei die erhöhte Temperatur im Bereich von 40 bis 100°C liegt.

8. Vorläufer nach einem der vorstehenden Ansprüche, wobei das Magnesium in einer Menge von 1 bis 6 Gew.-%, bezogen auf das Gesamtgewicht der Lösung, bereitgestellt wird.

9. Fester Olefinpolymerisationsprokatalysator, erhältlich durch Inberührungbringen eines Prokatalysator-Vorläufers wie in einem der Ansprüche 1 bis 8 beansprucht, mit einem Halogenid von tetravalentem Titan, einem optionalen Halogenkohlenwaserstoff und einem Elektronendonor.

10. Prokatalysator nach Anspruch 9, wobei das Halogenid von tetravalentem Titan Titantetrachlorid ist und der Elektronendonor ein Alkylester einer aromatischen Monocarbon- oder Dicarbonsäure ist.

11. Olefinpolymerisationsprokatalysator hoher Aktivität, erhältlich durch Inberührungbringen eines Prokatalysators wie in Anspruch 9 oder 10 beansprucht mit einem Cokatalysator auf Basis einer Organoaluminiumverbindung und einem Mittel zur Kontrolle der Selektivität.

12. Katalysator nach Anspruch 11, wobei der Cokatalysator Trialkylaluminium ist und das Mittel zur Kontrolle der Selektivität ein Alkylester einer aromatischen Monocarbon- oder Dicarbonsäure oder ein Organosilan der Formel
R'_{q}Si(OR)_{4-q}
ist, worin R' gleich Alkyl oder Aryl mit bis zu 10 Kohlenstoffatomen ist, R gleich Alkyl mit bis zu 4 Kohlenstoffatomen ist und q gleich 1 oder 2 ist.

13. Verfahren zur Polymerisation eines niedrigen α-Olefins mit bis zu 4 Kohlenstoffatomen, das Inberührungbringen mindestens eines niedrigen α-Olefins mit bis zu 4 Kohlenstoffatomen unter Polymerisationsbedingungen mit einem Katalysator wie in Anspruch 11 oder 12 beansprucht umfasst.

14. Verfahren nach Anspruch 13, wobei das niedrige α-Olefin Propylen ist.

## Revendications

1. Précurseur de procatalyseur de polymérisation d'oléfines qui contient des parties magnésium et titane et qui est obtenu en mettant en contact du magnésium, un alcoxyde de titane, chaque alcoxyde comportant jusqu'à 4 atomes de carbone, un borate de trialkyle et un alcanol dans un diluant de réaction inerte à température élevée.

2. Précurseur selon la revendication 1, dans lequel chaque groupe alkyle du borate de trialkyle comporte jusqu'à 4 atomes de carbone.

3. Précurseur selon la revendication 1 ou la revendication 2, dans lequel l'alcanol comporte jusqu'à 4 atomes de carbone.

4. Précurseur selon l'une quelconque des revendications précédentes, qui a la formule
Mg₃Ti(OR)ₛ[B(OR)₄]ₜ
dans laquelle O < t ≤ 2 et s égale 10 - t, et chaque R est indépendamment un alkyle comportant jusqu'à 4 atomes de carbone.

5. Précurseur selon la revendication 4, dans lequel t est 2 et R est éthyle.

6. Précurseur selon l'une quelconque des revendications précédentes, dans lequel la mise en contact du magnésium, d'un alcoxyde de titane comportant jusqu'à 4 atomes de carbone et d'un alcanol dans un diluant de réaction inerte à température élevée, a lieu à une pression suffisante pour maintenir le mélange réactionnel dans un état non gazeux.

7. Précurseur selon l'une quelconque des revendications précédentes, dans lequel la température élevée se trouve dans la plage de 40 à 100°C.

8. Précurseur selon l'une quelconque des revendications précédentes, dans lequel le magnésium est apporté en une quantité de 1 à 6% en poids sur la base du poids total de la solution.

9. Procatalyseur de polymérisation d'oléfines solide pouvant être obtenu en mettant un précurseur de procatalyseur comme revendiqué dans l'une quelconque des revendications 1 à 8, en contact avec un halogénure de titane tétravalent, un halohydrocarbure éventuel et un donneur d'électrons.

10. Procatalyseur selon la revendication 9, dans lequel l'halogénure de titane tétravalent est le tétrachlorure de titane et le donneur d'électrons est un ester alkylique d'un acide monocarboxylique ou dicarboxylique aromatique.

11. Catalyseur de polymérisation d'oléfines de haute activité pouvant être obtenu en mettant un procatalyseur comme revendiqué dans la revendication 9 ou la revendication 10, en contact avec un cocatalyseur composé organoaluminium et un agent de contrôle de sélectivité.

12. Catalyseur selon la revendication 11, dans lequel le cocatalyseur est un trialkylaluminium et l'agent de contrôle de sélectivité est un ester alkylique d'un acide monocarboxylique ou dicarboxylique aromatique ou un organosilane de formule
R'_{q}Si(OR)_{4-q}
dans laquelle R' est un alkyle ou aryle comportant jusqu'à 10 atomes de carbone, R est un alkyle comportant jusqu'à 4 atomes de carbone et q est 1 ou 2.

13. Procédé de polymérisation d'une α-oléfine inférieure comportant jusqu'à 4 atomes de carbone, qui comprend la mise en contact d'au moins une α-oléfine inférieure comportant jusqu'à 4 atomes de carbone, dans des conditions de polymérisation, avec un catalyseur tel que revendiqué dans la revendication 11 ou 12.

14. Procédé selon la revendication 13 dans lequel l'α-oléfine inférieure est le propylène.
